# EUROPEAN PATENT APPLICATION

(11) **EP 1 604 864 A2**
(43) Date of publication of application: **14.12.2005**
(21) Application number: 05012511.1
(22) Date of filing: 10.06.2005
(51) Int. Cl.: B60P 1/43, B65G 69/28, B66F 7/24

(54) **Ramp for loading vehicles**

(30) Priority: 11.06.2004 IT MO20040147
(71) Applicant: C.L.M. SOCIETA' A RESPONSABILITA' LIMITATA, 41030 Bomporto (MO) (IT)
(72) Inventor: Baraldi, Walter, 41100 Modena (IT); Baraldi, Gino, 41100 Villanova di Modena (MO) (IT); Baraldi, Andrea, 41100 Modena (IT)
(74) Representative: Luppi, Luigi

(57) **Abstract**

The ramp (1) for loading vehicles comprises un running-surface body provided with reinforcing means (11) which has at least the ground support portion (201) provided with further reinforcing means (111).

## Description

The present invention relates to a ramp for vehicles.

Removable ramps are known that are used for loading different kinds of vehicle, especially vehicles equipped with tracks, onto the loading surfaces of trucks or trailers used to transport them.

Known ramps comprise an elongated structure composed of a pair of longitudinal members, which constitute its sides, between which crosspieces or plates are fixed that give rise to the running plane of the ramps.

At the ends of the latter, which are intended to be hooked onto the thresholds of the loading surfaces, they are provided with members for attaching to the latter in order to prevent the ramps from being able to slide from the thresholds and fall to the ground whilst a vehicle is moving onto or off them; respective connecting elements are also provided to connect without appreciable interruptions the aforementioned ends of the ramps to the loading surfaces.

According to the most recent prior art, the ramps are made of light materials, for example aluminium, to enable easier manipulation thereof; furthermore, the structures of the crosspieces are modular and have broken-line cross sections, to create reinforcements suitable for withstanding the flexure due to the weight of the vehicles; the modular design of both the crosspieces and of the longitudinal members enables ramps to be made that have lengths that are adaptable to specific needs and the heights to be ascended and the angle of tilt to be determined that is to be provided for each type of vehicle.

Nevertheless, the known ramps have a first drawback that mainly occurs when the vehicles that drive up them are of the type provided with tracks: when the tracks start the ascent up the ramps fitted between the ground and the threshold of a loading surface, and are thus tilted, the latter, for an initial portion rest exclusively on two end points in which the contact with both the ground and with the ramps occurs, thus concentrating the vehicle's weight on these two points.

Simultaneously, the tracks apply a force of traction in these points that has a direction that is tangential to the contact surfaces, and thus to the running planes of the ramps, a force the reaction of which enables the vehicle to move and ascend along the latter.

Also during the descent phase, the drawback arises due to the fact that the drivers tend to make the vehicles descend the ramp very slowly, travelling along it for successive short distances and not continuously, braking the descent movement several times.

Each actuation of the brakes is transmitted to the ramps through the tracks, loading them in a repetitive manner with great overloading pulses.

The combined action of the weight of the vehicle and the tangential force that are exchanged during the phase of transfer between the ramps and the ground, the serrated surface of the tracks and the running plane of the ramps, causes premature wear above all to the initial portion of the ramps, i.e. the portion facing the ground, and the consequent premature yielding of this portion in relation to the other parts of the ramps.

A second drawback is the fact that the ramps form ascent angles of significant degree and for this reason the vehicles may slide down the running plane, both during ascent and descent, thus creating abrasion that causes acceleration of damage to the ramps.

In order to restore the operation of the latter extraordinary maintenance work is required to replace the damaged parts, especially the crosspieces, and the latter, in addition to creating maintenance costs, makes the ramps temporarily unavailable for the time required to complete the aforementioned work.

An object of the present ramp for vehicles is to improve the prior art.

A further object is to excogitate a ramp for vehicles that enables the ascent and descent of tracked vehicles from the bodies of vehicles designed for their transport without premature structural failures occurring.

Another object is to devise a ramp for vehicles that improves adhesion of the rectilinear-motion members of the latter to the running plane.

According to the invention a ramp is provided for vehicles, comprising a running-surface body provided with reinforcing means characterised in that at least a portion of said body is provided with further reinforcing means.

Further features and advantages will become clearer from the disclosure of a preferred embodiment of a ramp for vehicles, illustrated by way of non-limitative example in the attached tables of drawings, in which:
Figure 1 shows a tracked vehicle in an ascent phase along a pair of ramps for loading it up an ascent phase along a pair of ramps to load it onto a body of a truck;
Figure 2 shows a side view of a schematic detail of a tracked vehicle in a transfer stage between the ground and a ramp;

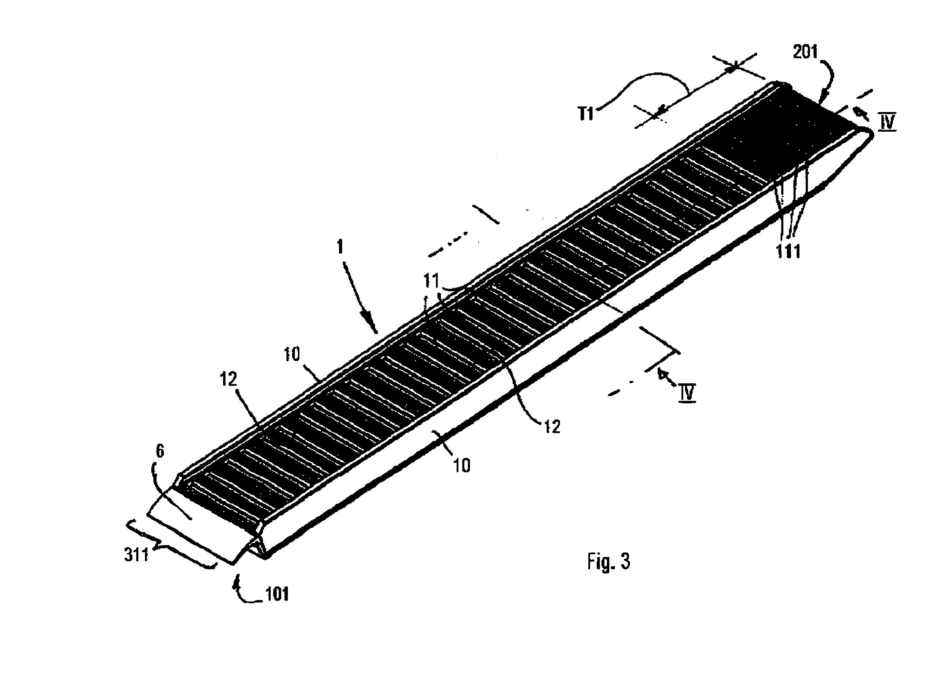

Figure 3 is a perspective view of a ramp for vehicles in figure 1;

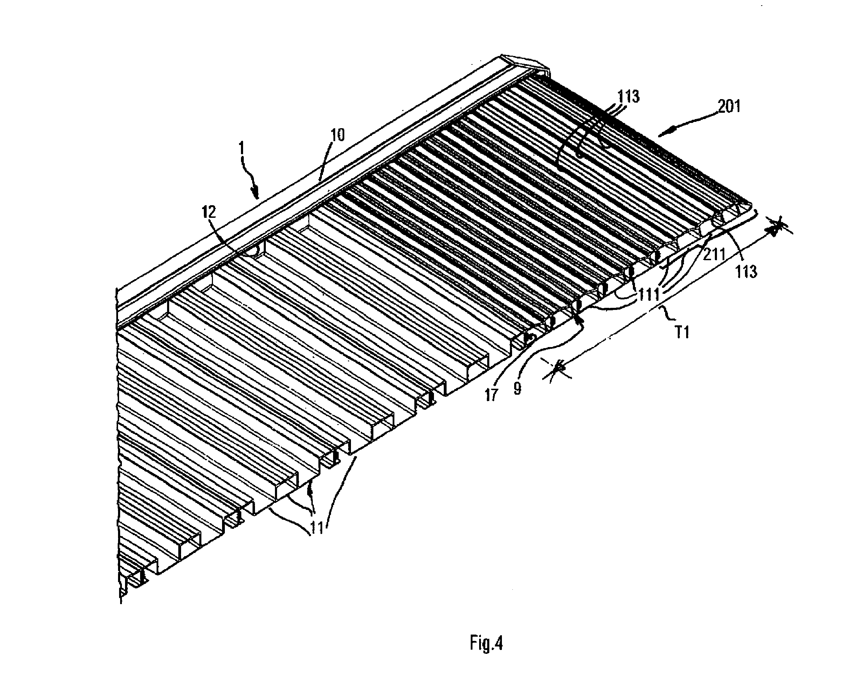

Figure 4 is a longitudinal section of a portion of the ramp in figure 3, along a plane IV-IV in Figure 3;
Figure 5 is a transverse section of a segment that is broken and on an enlarged scale of a profiled member that constitutes the ramp for the vehicles in figure 3.

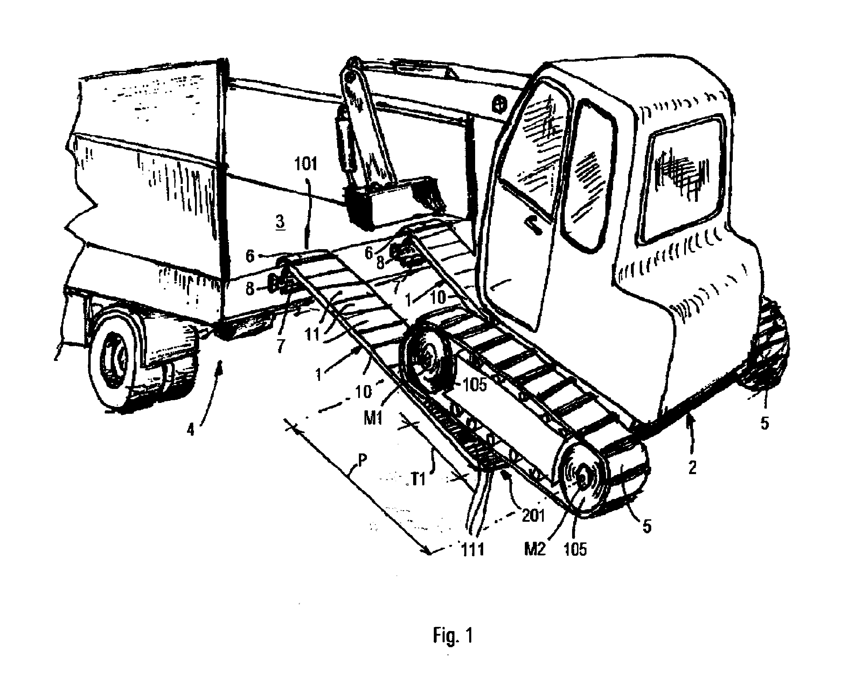

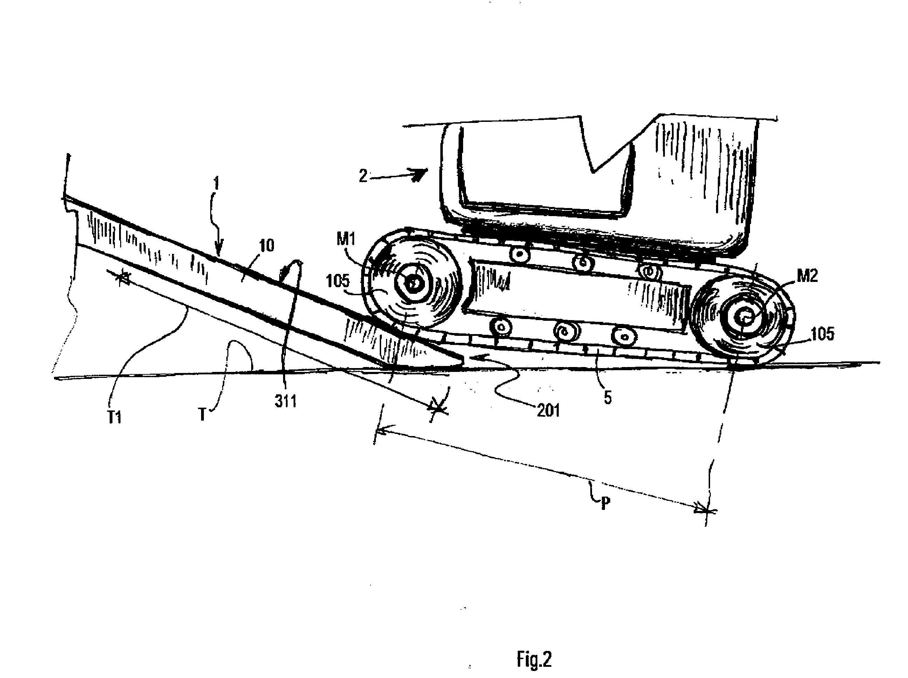

With reference to figures 1 and 2, 1 indicates two ramps for allowing the ascent or descent of a vehicle 2 onto or from a loading surface 4 suitable for the transport of the latter.

In the above figures, the vehicle 2 is an excavating machine provided with tracks 5.

Each of the ramps 1 is provided, at an end 101 facing the plane 3, with a respective element 6 joining and connecting the latter and is provided with a respective lip 7 engageable with a bracket 8 projecting from the rear edge of the plane 3, to hook the ramp 1 to the latter.

On the side opposite the end 101, in each ramp 1 a second end 201 is defined that is intended to be rested on the ground T and which has a portion T1 that is provided with further reinforcing means 9.

Each ramp 1 comprises a pair of longitudinal members 10 that are parallel to each other and form the sides thereof and a plurality of crosspieces 11 that are fixed parallel to and contiguously with one another by fixing means 17 and which have a cross section that substantially forms a broken-line profiled element, that is alternatively open and shut.

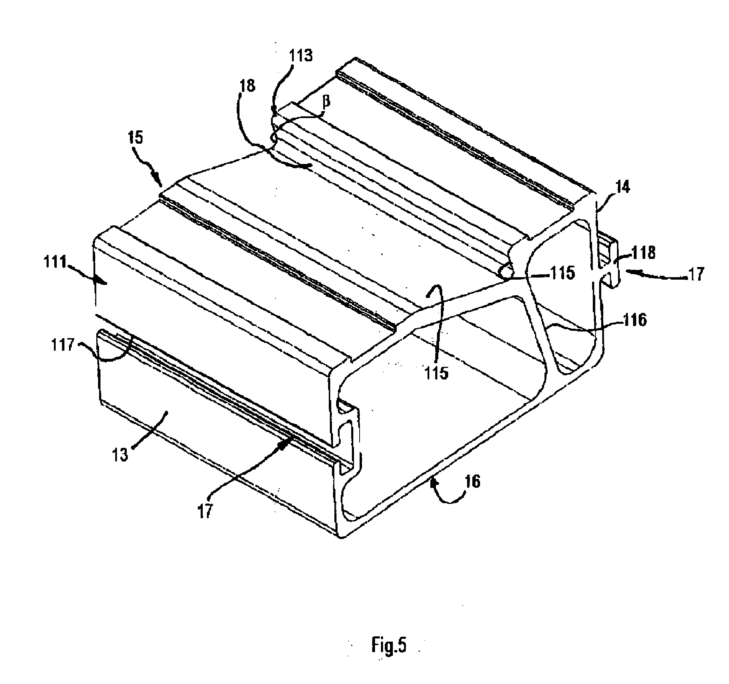

In portion T1, the further reinforcing means 9 comprises a series of crosspieces 111 that are still fixed parallel and contiguously to one another by the fixing means 17 and which have a cross section that has a closed perimeter, as shown in the detail in Figure 5.

The crosspieces 11 and 111 together form a running plane 311 on which the vehicles 2 may travel. The ends of the crosspieces 11 and 111 are housed in respective longitudinal guides 12 that are provided on the internal faces of the longitudinal members 10.

In the preferred embodiment, the crosspieces 111 comprise segments of profiled element and the perimeter of the section of the latter defines a first side 13 and a second side 14 that are substantially parallel to one another; the sides 13 and 14 are joined with a respective transverse third side 15 and a respective transverse fourth side 16 and are provided with the aforementioned fixing means 17.

The latter, in its preferred embodiment, respectively comprises a female element 117 that has a T-shaped transverse section and a male element 118 that has the same section and dimensions such as to be able to be slideably inserted into the female element 117 of a contiguous crosspiece 111.

The third side 15 has two portions 115 tilted and converging towards the fourth side 16 and which form a concavity 18 that faces outwards and defines with the running plane 311, tooth means 113 that also faces outwards and on a side opposite the fourth side 16 and is oriented to promote the ascent and descent of the vehicles 2.

The length of the portion is determined on an individual basis, according to the type of vehicles for which the ramps 1 are used or can be previously determined in proportion to the wheelbase P of the vehicles that have to climb up or down the ramps 1, the term wheelbase P being defined, as is known, as the distance between two axles M1 and M2 of the vehicles on which the normal wheels are fitted for transfer or the toothed wheels 105 are fitted on which the tracks 5 are closed.

Accordingly, during the ascent phase, the portion T1 opposes a mechanical resistance that is noticeably greater than that of known ramps, and the presence of the oriented tooth means 113 enables slipping of the tracks 5 or of normal wheels with pneumatic tyres to be avoided, both during the ascent and descent of vehicles up and down the ramps 1.

It should be pointed out that the portion T1 comprises, in the preferred embodiment, a first monobloc profiled end element, indicated by 211, which is composed of a plurality of crosspieces 111 that have a closed-perimeter section, and of a number of further single crosspieces 111 that are fixed together and are interposed between the monobloc profiled element 211 and the crosspieces 11; the number of the single crosspieces 111 is variable and determines the total length of the ramp 1.

In a second possible embodiment, the further reinforcing means (9) comprises a preset number of further crosspieces 111 that have cross sections that have a thickness that is noticeably greater than the thickness of the sections of the crosspieces 1.

In a third possible embodiment of the ramp 1 for vehicles, the further crosspieces 111 have solid transverse cross sections.

## Claims

1. Ramp (1) for vehicles (2), comprising a running-surface body provided with reinforcing means **characterised in that** at least a portion of said body is provided with further reinforcing means (9).

2. Ramp (1) for vehicles (2) according to claim 1 wherein said body defines a second ground support (T) end (201) and a first end (101) opposite said second end (201), positionable during use at a greater height than said second end (201).

3. Ramp (1) for vehicles (2) according to any one of claims 1 or 2 wherein said second end (201) has a portion (T1) of said body comprising said second end (201) that is provided with said further reinforcing means (9).

4. Ramp (1) for vehicles (2) according to claim 1 wherein said body comprises:
- a plurality of crosspieces (11) brought up parallel to one another and fixed together transversely to a travel direction that define a running surface (311),
- containing means (10, 12) of the ends of said crosspieces .

5. Ramp (1) for vehicles (2) according to claim 1 or 2 wherein said further reinforcing means (9) comprises a preset number of further crosspieces (111) brought up to one another and parallel to said crosspieces (11), said further crosspieces (111) having transverse closed-perimeter sections.

6. Ramp (1) for vehicles (2) according to claim 1 or 2 wherein said further reinforcing means (9) comprises a preset number of further crosspieces (111) that have cross sections having significantly greater thicknesses than the thickness of the sections of said crosspieces (11).

7. Ramp (1) for vehicles (2) according to claim 1 or 2 wherein said preset number of said further crosspieces (111) has solid cross sections.

8. Ramp (1) for vehicles (2) according to any one of claims 1 to 7 wherein said cross sections of at least said further crosspieces (111) form longitudinal raised tooth means (113).

9. Ramp (1) for vehicles (2) according to claim 8 wherein said tooth means (113) is orientated to promote the ascent of the vehicles (2) onto said ramp (1).

10. Ramp (1) for vehicles (2) according to any one of claims 1 to 9 wherein said portion (T1) has a length that is proportionate to the wheelbase (P) of the vehicles (2).

11. Ramp (1) for vehicles (2) according to any one of claims 1 to 10 wherein said portion (T1) comprises a monobloc element (211) and a presettable number of further crosspieces (111), for the presetting of the length of said ramp (1).

12. Crosspiece (111) for ramps (1) for vehicles (2) **characterised in that** it has a closed-perimeter box transverse section that defines a first side (13) and a second side (14) that are substantially parallel to one another and are transversely orthogonal to a running plane (311), said first side (13) and second side (14) being joined to a respective transverse third side (15) and a transverse fourth side (16), contiguous crosspiece (111) joining means being provided that is placed on said first side (13) and second side (14).

13. Crosspiece (111) according to claim 12 wherein said third transverse side (15) has two converging portions (115) tilted to said fourth side (16) and forming a concavity (18) that generates tooth means (113) facing outwardly and opposite said fourth side (16).

14. Crosspiece (111) according to claim 12 wherein said fixing means (17) comprises male elements (118) and female elements (117) couplable with corresponding female elements (117) and male elements (118) of contiguous crosspieces (111).

15. Use of a profiled element for crosspieces (111) according to any one of claims from 11 to 14 for the formation of running bodies of ramps (1) for vehicles (2).
